# EUROPÄISCHE PATENTANMELDUNG

(11) **EP 3 912 717 A1**
(43) Veröffentlichungstag der Anmeldung: **24.11.2021**
(21) Anmeldenummer: 21167552.5
(22) Anmeldetag: 09.04.2021
(51) Int. Cl.: B01J 19/24, B01J 19/28, B01J 2/18, B01J 2/16

(54) **ROHRLEITUNGSSYSTEM UND DESSEN VERWENDUNG**

(30) Priorität: 20.05.2020 DE 102020206384
(71) Anmelder: Glatt Ingenieurtechnik GmbH, 99427 Weimar (DE)
(72) Erfinder: Ohlendorf, Frank, 99086 Erfurt (DE); Schimm, Michael, 99448 Kranichfeld (DE)
(74) Vertreter: Patentanwälte Magenbauer & Kollegen Partnerschaft mbB

(57) **Zusammenfassung**

Die Erfindung betrifft ein Rohrleitungssystem (1) zur Herstellung und/oder Behandlung von Partikeln (P) in einem Prozessgasstrom, insbesondere in einem pulsierenden Prozessgasstrom, bei sehr hohen Prozessgastemperaturen von größer 1.200 °C sowie dessen Verwendung.

## Beschreibung

Die Erfindung betrifft ein Rohrleitungssystem umfassend eine einen Strömungskanal aufweisende Rohrleitungsanordnung, die über mindestens drei eine Rohrleitungsmittelachse, eine Innenwandfläche und eine Außenwandfläche aufweisende Rohrleitungseinheiten verfügt und die zumindest teilweise einen eine Reaktionskammer umfassenden Reaktor zur Herstellung und/oder Behandlung von Partikel in einem Prozessgasstrom, insbesondere in einem pulsierenden Prozessgasstrom, ausbildet, wobei eine Rohrleitungseinheit als Prozessgaszulaufteil, mindestens eine Rohrleitungseinheit als Zwischenteil und eine Rohrleitungseinheit als Prozessgasablaufteil ausgebildet ist, wobei jede Rohrleitungseinheit wenigstens einen einer benachbarten Rohrleitungseinheit zugeordneten Endabschnitt aufweist, und wobei ferner an einem Endabschnitt einer Rohrleitungseinheit von einander paarweise zugeordneten Rohrleitungseinheiten eine Zentriereinrichtung angeordnet ist, die zur Aufnahme eines Endabschnitts der anderen Rohrleitungseinheit der einander paarweise zugeordneten Rohrleitungseinheiten geeignet ist, sodass ein geschlossener Strömungskanal von einem Prozessgaseintritt des Prozessgaszulaufteils bis zu einem Prozessgasaustritt des Prozessgasablaufteils erzeugt wird.

Rohrleitungssysteme sind seit langem bekannt, insbesondere auch Rohrleitungssysteme für von außen beheizbare, heiße Gase. Bei Prozessgastemperaturen von bis zu 1.200 °C werden hitzebeständige Materialien wie z. B. hitzebeständiger Stahl (Material-Nr. 1.4841) oder hitzebeständiger Edelstahl (Material-Nr. 1.4828, 1.4876, 2.4851 oder dergleichen) für derartige Rohrleitungssysteme eingesetzt.

Für noch höhere Prozessgastemperaturen auch größer 1.200 °C sind metallische Rohrleitungssysteme mit hitzebeständigen Innenauskleidungen oder Rohrleitungssysteme mit Kühlmantel bekannt. Durch die hitzebeständigen Innenauskleidungen bzw. den Kühlmantel wird auch bei Prozessgastemperaturen größer 1.200 °C eine Temperaturreduzierung im Rohrleitungsmaterial auf Temperaturen kleiner oder sogar deutlich kleiner als 1.200 °C erreicht. Dies ermöglicht zwar eine Prozessgasführung bei den entsprechend hohen Prozessgastemperaturen, allerdings weisen diese Rohrleitungssysteme auf Grund ihres Aufbaus den Nachteil auf, dass diese nicht von außen beheizbar sind.

Darüber hinaus finden bei noch höheren Prozessgastemperaturen insbesondere bis ca. 1.700 °C Rohrleitungssysteme aus keramischen Werkstoffen Anwendung, bspw. einzonige oder mehrzonige Klapprohröfen der Fa. Carbolite Gero GmbH & Co. KG. Diese werden jedoch als einzelne Rohrleitungen ohne daran angeschlossene weitere Rohrleitungen ausgeführt. Diese keramischen Rohrleitungen sind zwar von außen mittels Klapprohrofen beheizbar, wobei die Rohrleitungen nicht mit einem am Wärme- und Stofftransport teilnehmenden Prozessgasstrom beaufschlagbar sind. Die Rohrleitungen werden, wenn notwendig mit einem Schutzgasstrom oder Reaktionsgasstrom, der vorzugsweise ein wasserstoffhaltiges Inertgas sein kann, das insbesondere für eine reduzierende Reaktion verwendet werden kann, beaufschlagt.

Aufgabe der Erfindung ist es daher ein Rohrleitungssystem für Anwendungen bei sehr hohen Prozessgastemperaturen bereitzustellen, das angeschlossene Rohrleitungen aufweist und geeignet ist mit am Wärme- und Stofftransport teilnehmenden Prozessgasströmen beaufschlagt zu werden.

Die Aufgabe wird bei einem Rohrleitungssystem eingangs genannter Art dadurch gelöst, dass das Prozessgaszulaufteil sowie das Prozessgasablaufteil aus einem metallischen Werkstoff und mindestens ein Zwischenteil aus einem nicht-metallischen Werkstoff ausgebildet ist. Der Vorteil des bevorzugten Rohrleitungssystems besteht darin, dass es dadurch möglich ist, dem Rohrleitungssystem einen Prozessgasstrom, insbesondere einen heißen, pulsierenden Prozessgasstrom, zuzuführen und diesen im Bereich des nicht-metallischen Zwischenteils auf noch höhere Prozessgastemperaturen durch eine Heizeinrichtung zu erwärmen und diesen Bereich zur Herstellung und/oder Behandlung von Partikel in einem Prozessgasstrom heranzuziehen.

Das Rohrleitungssystem ist geeignet zur Herstellung und/oder Behandlung von Partikeln in Prozessen mit von außen beheizbaren Rohrleitungseinheiten aus nicht-metallischen und/oder nicht schweißbaren Werkstoffen insbesondere für durchströmte Heißgasanwendungen bis ca. 1.700 °C Prozessgastemperatur unter äußeren atmosphärischen Bedingungen. Vorzugsweise sind die Prozesses Hochtemperaturprozesse wie z.B. Trocknungsprozesse, Verdampfungsprozesse, Kalzinierungsprozesse, Pyrolyseprozesse, Oxidationsprozesse oder Reduktionsprozesse unter Verwendung von Prozessgasen, die Sauerstoff enthalten können oder inert sind, die reine Prozessgase oder Prozessgasgemische darstellen können, die mit oder ohne Prozessgasströmung ablaufen, die mit kontinuierlichen oder diskontinuierlichen Prozessgasströmen ablaufen, bei denen die Wärme im Prozessgasstrom gehalten wird und nicht über die Rohrwandung abgeführt wird und/oder die bei pulsierenden oder nicht pulsierenden Prozessgasströmen ablaufen. Die Strömungsrichtung und die Lageanordnung sind hierbei beliebig.

Nach einer diesbezüglich vorteilhaften Ausgestaltung eines Rohrleitungssystems ist der nicht-metallische Werkstoff ein nicht schweißbarer Werkstoff. Hierbei weist der nicht-metallische Werkstoff eine Wärmeleitfähigkeit von größer gleich 1,0 W/(mK) bei Herstellungs- und/oder Behandlungstemperatur auf, bevorzugt größer gleich 2,0 W/(mK), besonders bevorzugt größer gleich 3,0 W/(mK), ganz besonders bevorzugt größer gleich 4,0 W/(mK), am meisten bevorzugt von größer gleich 5,0 W/(mK). Bevorzugt ist der nicht-metallische Werkstoff ein keramischer Werkstoff, insbesondere Frialit F99,7 der FRIATEC AG, 68229 Mannheim (dieser Bereich der FRIATEC AG wurde verkauft und gehört jetzt zur KYOCERA Fineceramics Solutions GmbH, 68229 Mannheim). Hierdurch sind zum einen sehr hohe Herstellungs- und/oder Behandlungstemperaturen erreichbar und zum anderen ist die Wärmeleitfähigkeit der Keramik Frialit F99,7 bei 1.500 °C mit 5,3 W/(mK) deutlich besser als bei anderen herkömmlichen Keramiken.

Des Weiteren sind in einem bevorzugten Rohrleitungssystem die Zentriereinrichtung und die Rohrleitungseinheit als bauliche Einheit ausgebildet. Eine solche Ausgestaltung weist eine einfachere Herstellung und eine höhere Bauteilstabilität auf.

Entsprechend einer zusätzlichen vorteilhaften Fortbildung des Rohrleitungssystems weist die Zentriereinrichtung zur Aufnahme eines Endabschnitts einer Rohrleitungseinheit in ihrer Innenwandfläche eine Stufe mit einer axial orientierten Schulter auf, wobei die Schulter als Anschlag für die aufzunehmende Rohrleitungseinheit ausgebildet ist. Diesbezüglich ist die Stufe bevorzugt als Ringstufe mit einer axial orientierten Ringschulter ausgebildet. Vorteilhaft daran ist, dass so eine schnelle, einfache und sichere Verbindung zwischen den beiden Rohrleitungseinheiten erzeugbar ist.

Darüber hinaus ist gemäß einer weiteren vorteilhaften Weiterbildung des Rohrleitungssystems zwischen einem Endabschnitt einer Rohrleitungseinheit und der Zentriereinrichtung eine Dichtungseinrichtung angeordnet. Bevorzugt ist die Dichtungseinrichtung als Flachdichtung, Profildichtung, Pressdichtung und/oder Labyrinthdichtung ausgebildet. Hierdurch werden Wärmeverluste reduziert und die Rohrleitungseinheiten gegeneinander abgedichtet.

Nach einer zusätzlichen vorteilhaften Ausgestaltung eines bevorzugten Rohrleitungssystems weist das Rohrleitungssystem eine ein nicht-metallisches Zwischenteil erwärmende Heizeinrichtung. Zweckmäßigerweise ist die Heizeinrichtung geeignet das durch die Rohrleitungsanordnung, insbesondere den Rohrleitungsanordnungsabschnitt, strömende, pulsierende Prozessgas auf Temperaturen von 1.200 °C bis 3000 °C, bevorzugt von 1.200 °C bis 2200 °C, besonders bevorzugt von 1.300 °C bis 1800 °C, am meisten bevorzugt von 1.400 °C bis 1500 °C zu erwärmen.

Die Erwärmung des Prozessgases erfolgt im nicht-metallischen mindestens einen Zwischenteil, wobei das eintretende Prozessgas in den metallischen Rohrleitungseinheiten, je nach deren Ausbildung, bereits hohe Prozessgastemperaturen bis ungefähr 1.200 °C oder höher aufweisen kann. Zwischen metallischen Prozessgaszulaufteil und dem mindestens einen nicht-metallischen, insbesondere keramischen, Zwischenteil existiert eine Aufheizstrecke und zwischen dem mindestens einen nicht-metallischen, insbesondere keramischen, Zwischenteil und dem metallischen Prozessgasablaufteil eine Abkühlstrecke. Im Bereich der Aufheizstrecke wird das Prozessgas von einer Zulauftemperatur auf eine Herstellungs- und/oder Behandlungstemperatur erwärmt und im Bereich der Abkühlstrecke wird die Herstellungs- und/oder Behandlungstemperatur wieder auf eine Ablauftemperatur abgekühlt, sodass weder Prozessgaszulaufteil noch Prozessgasablaufteil eine zu hohe thermische Beanspruchung erfahren.

Entsprechend einer weiteren vorteilhaften Fortbildung des Rohrleitungssystems umfassen das Prozessgaszulaufteil und das Prozessgasablaufteil jeweils eine einen Endabschnitt aufweisende Rohrleitung, wobei der jeweilige Endabschnitt der Rohrleitung über eine Zentriereinrichtung verfügt. Hierdurch wird sichergestellt, dass das Zwischenteil keine Zentriereinrichtung aufweisen muss, um zwischen Prozessgaszulaufteil und Prozessgasablaufteil verbaut zu werden.

Gemäß einer weiteren bevorzugten Ausgestaltung des Rohrleitungssystems verfügt das Prozessgaszulaufteil über eine Materialaufgabekammer, der über eine Materialaufgabeeinrichtung Ausgangsstoffe zuführbar sind oder zugeführt werden. Zweckmäßigerweise ist die Materialaufgabeeinrichtung in ihrer Lageposition verstellbar in der Materialaufgabekammer angeordnet. Die Verstellbarkeit der Lageposition bietet den Vorteil die Materialaufgabeeinrichtung auf den jeweiligen Herstellungs- und/oder Behandlungsprozess individuell einstellen zu können. Prinzipiell ist ein Aufgabeort in der Materialaufgabekammer gewünscht, wobei ein solcher Aufgabeort ggf. zu einer Überhitzung der Ausgangsstoffe bereits in der Materialaufgabeeinrichtung, bspw. einer Düse, bevorzugt einer Mehrstoffdüse, einem Zuführungsrohr oder einem Pulverinjektor führt, sodass der optimale Aufgabeort der Ausgangsstoffe bevorzugt als Funktion von Aufgabeort und Aufgabetemperatur der Ausgangsstoffe ermittelt wird.

Bei einer diesbezüglich vorteilhaften Weiterbildung des Rohrleitungssystems ist die Rohrleitung in die Materialaufgabekammer eingesteckt ist, sodass das über den Prozessgaszulauf in das Prozessgaszulaufteil einströmende, pulsierende Prozessgas vor dem Einströmen in die Rohrleitung in der Materialaufgabekammer eine Umlenkung erfährt. Vorteilhaft hieran ist, dass hierdurch beim Waschen des Rohrleitungssystems nicht der Prozessgaszulauf und die daran anschließende den Prozessgasstrom vor dem Eintritt in das Rohrleitungssystem erwärmende Heizeinheit, insbesondere eine eine Flamme aufweisende Brennkammer oder ein Elektroheizer, gewaschen werden, sondern nach einem notwendigen Ausbau der Materialaufgabeeinrichtung die Waschflüssigkeit aus dem Prozessgaszulaufteil ohne Durchströmen des Prozessgaszulaufs austritt.

Darüber hinaus ist die Fortbildung vorteilhaft, weil die Materialaufgabeeinrichtung und die Rohrleitung eine gemeinsame Längsmittelachse aufweisen. Eine derartige Anordnung von Materialaufgabeeinrichtung und der Rohrleitung weist den Vorteil auf, dass die in das Prozessgas aufgegebenen Ausgangsstoffe bis zur Herstellung und/oder Behandlung keine Umlenkung erfahren müssen.

Nach einer zusätzlichen vorteilhaften Ausgestaltung eines Rohrleitungssystems verfügt das Rohrleitungssystem über eine als nicht metallisches Verbindungsteil, bevorzugt als keramisches Verbindungsteil, ausgebildete Rohrleitungseinheit, wobei das Verbindungsteil zwei Endabschnitte aufweist, an denen jeweils eine Zentriereinrichtung angeordnet ist. Hierdurch wird sichergestellt, dass das Zwischenteil keine Zentriereinrichtung aufweisen muss und dennoch mehrere Zwischenteile im Rohrleitungssystem miteinander verbindbar sind.

Weiter vorteilhaft ist, dass die Rohrleitungsanordnung über eine Halteeinrichtung verfügt, die geeignet ist, die Rohrleitungseinheiten der Rohrleitungsanordnung im Wesentlichen in ihrer Lageposition zu halten. Hierdurch wird dem Rohrleitungssystem lageunabhängig eine hohe Stabilität und ein idealer Zusammenhalt verliehen.

Entsprechend einer zusätzlichen vorteilhaften Ausgestaltung des Rohrleitungssystems weist die als Zwischenteil ausgebildete Rohrleitungseinheit an seinen Endabschnitten jeweils in ihrer Außenwandfläche eine Stufe mit einer axial orientierten Schulter auf, wobei die Schulter als Anschlag für die das Zwischenteil aufnehmende Zentriereinrichtung ausgebildet ist. Der Vorteil dieser Ausgestaltung liegt darin, dass so eine schnelle, einfache und sichere Verbindung zwischen den beiden Rohrleitungseinheiten erzeugbar ist.

Ganz besonders bevorzugt wird das Rohrleitungssystem nach einem der vorhergehenden Ansprüche zur Herstellung und/oder Behandlung von Partikeln in einem Prozessgasstrom, bevorzugt in einem pulsierenden Prozessgasstrom, verwendet.

Nachfolgend wird die Erfindung anhand der beiliegenden Zeichnung näher erläutert dieser zeigen
- Figur 1: eine Seitenansicht einer Ausführungsform eines Rohrleitungssystems, wobei eine als Reaktor ausgebildete Rohrleitungsanordnung in einer vertikalen Lageposition angeordnet ist,
- Figur 2: eine Schnittdarstellung der in der Figur 1 gezeigten Ausführungsform des Rohrleitungssystems,
- Figur 3: eine Detailansicht des in Figur 2 dargestellten Ausschnitts A, wobei in Ausschnitt A ein zwei Zwischenteile verbindendes, eine Flach- und eine Labyrinthdichtung aufweisendes Verbindungsteil gezeigt wird,
- Figur 4: eine Detailansicht des in Figur 2 dargestellten Ausschnitts B, wobei in Ausschnitt B ein Prozessgasablaufteil gezeigt wird,
- Figur 5: eine Detailansicht des in Figur 2 dargestellten Ausschnitts C, wobei in Ausschnitt C ein Prozessgaszulaufteil gezeigt wird,
- Figur 6: eine Ausführungsform einer als Zwischenteil ausgebildeten Rohrleitungseinheit,
- Figur 7: eine beispielhafte erste Ausführungsform einer Dichtungseinrichtung und
- Figur 8: eine beispielhafte zweite Ausführungsform einer Dichtungseinrichtung.

Sofern keine anderslautenden Angaben gemacht werden, bezieht sich die nachfolgende Beschreibung auf sämtliche in der Zeichnung illustrierten Ausführungsformen eines Rohrleitungssystems 1 zur Herstellung und oder Behandlung von Partikeln P in einem Prozessgasstrom, insbesondere einem pulsierenden Prozessgasstrom.

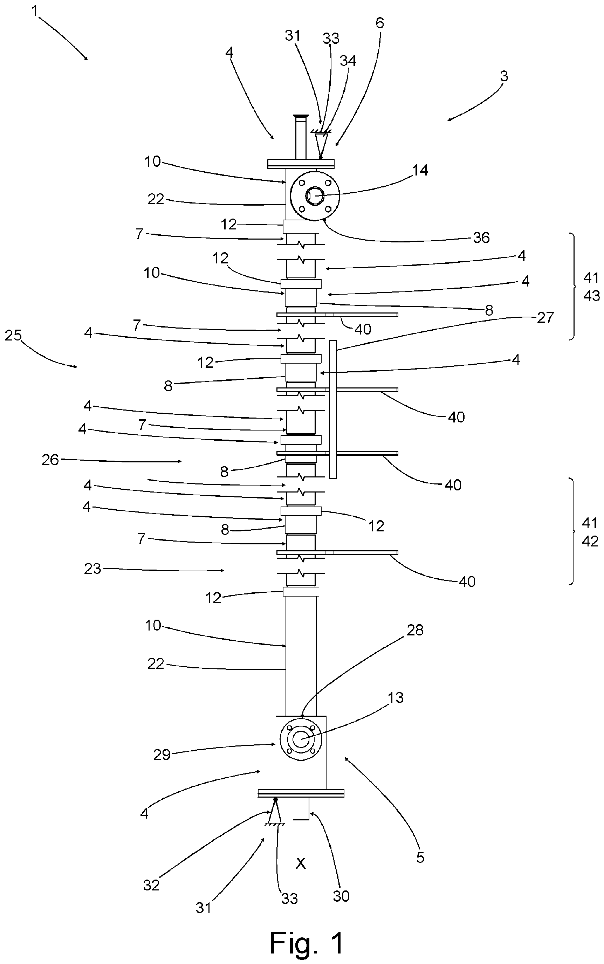

Das Rohrleitungssystem 1 umfasst eine einen Strömungskanal 2 aufweisende Rohrleitungsanordnung 3. Die Rohrleitungsanordnung 3 verfügt in der gezeigten Ausführungsform über elf eine Rohrleitungsmittelachse X-X aufweisende Rohrleitungseinheiten 4. In der in Fig. 1 dargestellten bevorzugten Ausführungsform weist die Rohrleitungsanordnung 3 vier verschiedene Rohrleitungseinheiten 4 auf, die als Prozessgaszulaufteil 5, Prozessgasablaufteil 6, Zwischenteil 7 und Verbindungsteil 8 ausgebildet sind. Jede Rohrleitungseinheit 4 weist darüber hinaus eine Innenwandfläche 9 und eine Außenwandfläche 10 auf. Hierbei sind zwischen Prozessgaszulaufteil 5 und Prozessgasablaufteil 6 fünf über jeweils ein Verbindungsteil 8 miteinander verbundene Zwischenteile 7 angeordnet.

Jede Rohrleitungseinheit 4 weist wenigstens einen einer benachbarten Rohrleitungseinheit 4 zugeordneten Endabschnitt 11 auf. An einem Endabschnitt 11 einer Rohrleitungseinheit 4 von einander paarweise zugeordneten Rohrleitungseinheiten 4 ist des Weiteren eine Zentriereinrichtung 12 angeordnet. Die Zentriereinrichtung 12 ist zur Aufnahme eines Endabschnitts 11 der anderen Rohrleitungseinheit 4 der einander paarweise zugeordneten Rohrleitungseinheiten 4 geeignet, sodass ein geschlossener Strömungskanal 2 von einem Prozessgaseintritt 13 des Prozessgaszulaufteils 5 bis zu einem Prozessgasaustritt 14 des Prozessgasablaufteils 6 erzeugt wird.

In der gezeigten, bevorzugten Ausführungsform des Rohrleitungssystems 1 sind die Zentriereinrichtung 12 und die Rohrleitungseinheit 4 zweckmäßigerweise als bauliche Einheit 15 ausgebildet. Eine getrennt von der Rohrleitungseinheit 4 ausgebildete Zentriereinrichtung 12 ist in einer hier nicht illustrierten Ausführungsform realisiert.

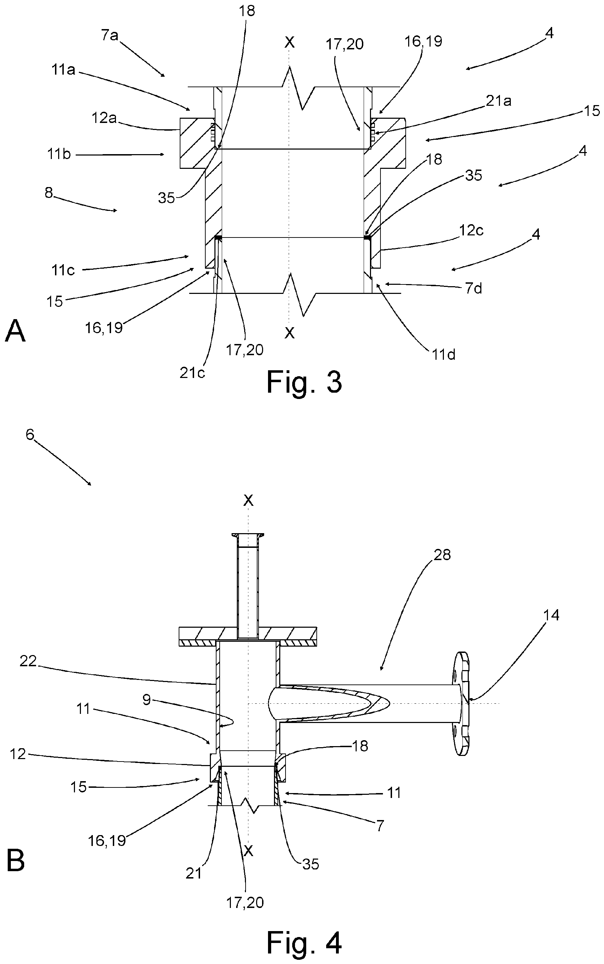

Die Zentriereinrichtung 12 zur Aufnahme eines Endabschnitts 11 einer Rohrleitungseinheit 4 weist in ihrer Innenwandfläche 9 eine Stufe 16 mit einer axial orientierten Schulter 17 auf, wobei die Schulter 17 als ein eine Anschlagfläche 35 ausbildender Anschlag 18 für die aufzunehmende Rohrleitungseinheit 4 ausgebildet ist. In der gezeigten Ausführungsform ist die Stufe 16 als Ringstufe 19 mit einer axial orientierten Ringschulter 20 ausgebildet, was insbesondere in den in den Fign. 3, 4 und 5 vergrößert gezeigten Detailbereich A, B und C ersichtlich ist.

Zwischen einem Endabschnitt 11 einer Rohrleitungseinheit 4 und der Zentriereinrichtung 12 ist vorzugsweise eine Dichtungseinrichtung 21 angeordnet, die zweckmäßigerweise als Flachdichtung, Profildichtung, Pressdichtung und/oder Labyrinthdichtung ausgebildet ist.

Prozessgaszulaufteil 5 und Prozessgasablaufteil 6 sind aus einem metallischen Werkstoff ausgebildet, wie z. B. einem hitzebeständigen Stahl (Material-Nr. 1.4841) oder einem hitzebeständigen Edelstahl (Material-Nr. 1.4828, 1.4876, 2.4851 oder dergleichen).

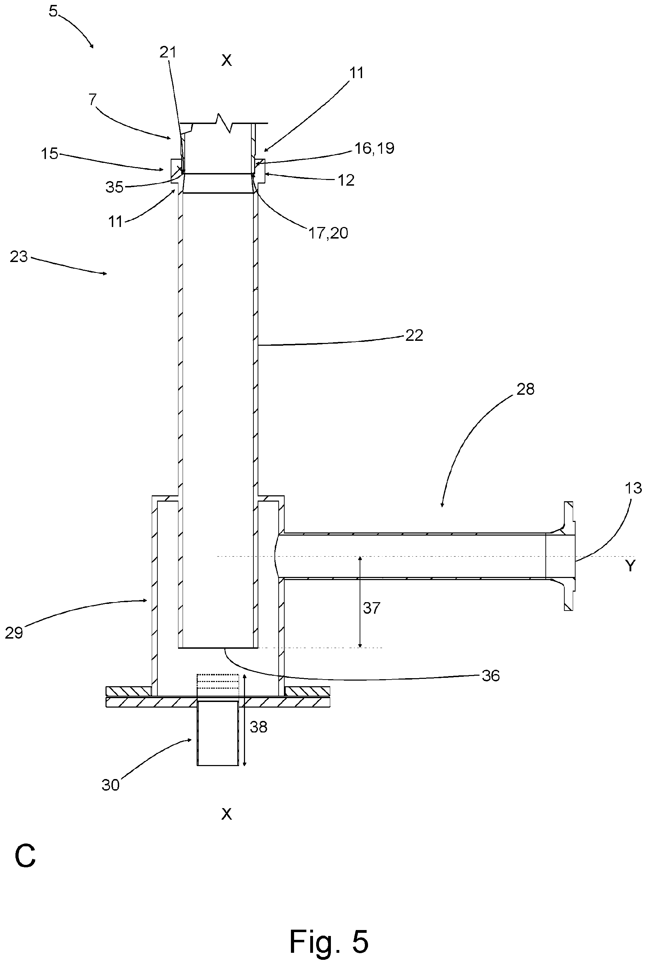

In der gezeigten Ausführungsform weisen Prozessgaszulaufteil 5 und Prozessgasablaufteil 6 jeweils eine einen Endabschnitt 11 umfassende Rohrleitung 22 auf. Der der Rohrleitung 22 zugeordnete Endabschnitt 11 verfügt jeweils über eine Zentriereinrichtung 12. Eine diesbezüglich detaillierte Darstellung ist den Fign. 4 und 5 zu entnehmen.

Ein Rohrleitungsanordnungsabschnitt 23 der Rohrleitungsanordnung 3 umfasst in der gezeigten Ausführungsform die Rohrleitungen 22 von Prozessgaszulaufteil 5 und Prozessgasablaufteil 6 sowie die Zwischenteile 7 und Verbindungsteile 8. Der Rohrleitungsanordnungsabschnitt 23 der Rohrleitungsanordnung 3 ist als ein über eine Reaktionskammer 24 verfügender Reaktor 25 ausgebildet und in der dargestellten Ausführungsform in einer vertikalen Lageposition angeordnet. Andere Lagepositionen des Rohrleitungsanordnungsabschnitts 23 sind möglich und in hier nicht illustrierten Ausführungsformen realisiert.

In einer Teilstrecke 26 des als Reaktor 25 ausgebildeten Rohrleitungsanordnungsabschnitts 23 der Rohrleitungsanordnung 3 weist das Rohrleitungssystem 1 zudem eine Heizeinrichtung 27 auf. Die Heizeinrichtung 27 erwärmt mindestens ein nicht-metallisches Zwischenteil 7, zweckmäßigerweise jedoch eine Vielzahl an Zwischenteilen 7 und deren dazugehörige Verbindungsteile 8. Somit umfasst die Teilstrecke 26 wenigstens ein Zwischenteil 7 des Rohrleitungsanordnungsabschnitts 23 der Rohrleitungsanordnung 3. Die Heizeinrichtung 27 ist geeignet das durch die Rohrleitungsanordnung 3 strömende, pulsierende Prozessgas im Bereich der Teilstrecke 26 auf Temperaturen von 1.200 °C bis 3000 °C, bevorzugt von 1.200 °C bis 2200 °C, besonders bevorzugt von 1.300 °C bis 1800 °C, am meisten bevorzugt von 1.400 °C bis 1500 °C zu erwärmen.

Stromauf der Teilstrecke 26 bildet sich ein Temperaturübergangsbereich 41 als Temperatureinlaufstrecke 42 aus, der der Ausbildung eines den nicht-metallischen, vorzugsweise keramischen, Werkstoffeigenschaften entsprechend erforderlichen Temperaturprofiles in der Keramik zwischen dem Prozessgaseintritt 13 und der beheizbaren Teilstrecke 26 zur Vermeidung von unzulässigen Temperaturspannungen dient, die zur Zerstörung des nicht-metallischen Werkstoffs führen würden.

Stromab der Teilstrecke 26 bildet sich ein Temperaturübergangsbereich 41 als Temperaturauslaufstrecke 43 aus, der der Reduzierung der Prozessgastemperatur in der Keramik auf einen Wert von kleiner gleich 1.200 °C unter Einhaltung eines erforderlichen Temperaturprofiles in der Keramik zwischen dem Ende der beheizbaren Teilstrecke 26 und dem Ende des keramischen Rohres zur Vermeidung von unzulässigen Temperaturspannungen dient, die zur Zerstörung des Werkstoffes führen würden.

Hierbei ist mindestens ein Zwischenteil 7 aus einem nicht-metallischen Werkstoff ausgebildet. Bevorzugt ist der nicht-metallische Werkstoff ein nicht schweißbarer Werkstoff, insbesondere ein keramischer Werkstoff wie Frialit F99,7. Vorzugsweise weist der nicht-metallische Werkstoff eine Wärmeleitfähigkeit von größer gleich 1,0 W/(mK) bei einer durch die Heizeinrichtung 27 erzeugten Herstellungs- und/oder Behandlungstemperatur des Prozessgases auf, bevorzugt größer gleich 2,0 W/(mK), besonders bevorzugt größer gleich 3,0 W/(mK), ganz besonders bevorzugt größer gleich 4,0 W/(mK), am meisten bevorzugt von größer gleich 5,0 W/(mK).

Durch die Verwendung eines nicht-metallischen Werkstoffs für mindestens ein Zwischenteil 7 sind diese Teile zum einen mit den sehr hohen Herstellungs- und/oder Behandlungstemperatur des Prozessgases beaufschlagbar und zum anderen ist die Wärmeleitfähigkeit des nicht-metallischen Werkstoffs, insbesondere der Keramik Frialit F99,7, bei den sehr hohen Herstellungs- und/oder Behandlungstemperatur des Prozessgases, vorzugsweise bei 1.500 °C mit 5,3 W/(mK) deutlich besser als bei anderen herkömmlichen Keramiken.

Das Prozessgaszulaufteil 5, das detailliert in Fig. 5 dargestellt ist, verfügt zudem über einen den Prozessgaseintritt 13 umfassenden Prozessgaszulauf 28, eine Materialaufgabekammer 29, der über eine Materialaufgabeeinrichtung 30 Ausgangsstoffe zuführbar sind und im Betriebszustand zugeführt werden, und die einen Endabschnitt 11 und eine daran angeordnete Zentriereinrichtung 12 umfassende, in die Materialaufgabekammer 29 eingesteckte Rohrleitung 22.

Die den Endabschnitt 11 und die daran angeordnete Zentriereinrichtung 12 umfassende Rohrleitung 22 ist in die Materialaufgabekammer 29 eingesteckt, sodass das über den Prozessgaseintritt 13 des Prozessgaszulaufs 28 in das Prozessgaszulaufteil 5 einströmende, pulsierende Prozessgas vor dem Einströmen in den mit der Rohrleitung 22 beginnenden Rohrleitungsanordnungsabschnitt 23 in der Materialaufgabekammer 29 eine Umlenkung erfährt.

Die Materialaufgabeeinrichtung 30 und die Rohrleitung 22 weisen eine gemeinsame Längsmittelachse X-X auf, sodass die der Materialaufgabekammer 29 über die Materialaufgabeeinrichtung 30 im Betriebszustand zugeführten Ausgangsstoffe beim Eintritt in den als Reaktionskammer 24 des Reaktors 25 ausgebildeten Rohrleitungsanordnungsabschnitt 23 keine Umlenkung erfährt.

Darüber hinaus ist die Materialaufgabeeinrichtung 30 zweckmäßigerweise in ihrer Lageposition verstellbar in der Materialaufgabekammer 29 angeordnet. Die Verstellbarkeit der Lageposition bietet den Vorteil die Materialaufgabeeinrichtung 30 auf den jeweiligen Herstellungs- und/oder Behandlungsprozess individuell einstellen zu können. Prinzipiell wird ein Aufgabeort für die Ausgangsstoffe in der Materialaufgabekammer 29 angestrebt, der eine optimale Aufgabe mittels Materialaufgabeeinrichtung 30 ermöglicht, bspw. einer Düse, insbesondere einer Mehrstoffdüse, einem Zuführungsrohr oder einem Pulverinjektor. Durch die Materialaufgabeeinrichtung 30 besteht die Möglichkeit dem Rohrleitungssystem 1 den Ausgangsstoff stets in seiner optimal aufbereiteten Form bspw. als Lösung, Suspension, Aufschlämmung, Schmelze, Emulsion oder als Feststoff, bevorzugt unter Verwendung eines Trägergases, zuzuführen. Der Aufgabeort wird allerdings von weiteren Parametern, wie bspw. der aufzugebenden Ausgangsstoffe, der Prozessgastemperatur, des Prozessdruckes usw. beeinflusst. Ist der optimale Aufgabeort bspw. weit in der Materialaufgabekammer 29 kann dies ggf. zu einer Überhitzung der Ausgangsstoffe bereits in der Materialaufgabeeinrichtung 30 führen, sodass die Materialaufgabeeinrichtung 30 dann etwas aus der Materialaufgabekammer 29 und somit aus dem durch die Rohrleitungsanordnung 3 strömenden, pulsierenden Prozessgasstrom herausgezogen wird. Der optimale Aufgabeort für die Ausgangsstoffe wird daher bevorzugt als Funktion des Aufgabeortes und der Aufgabetemperatur der Ausgangsstoffe ermittelt.

Insbesondere erfolgt eine Anordnung des dargestellten Rohrleitungssystems 1 vorzugsweise derart, dass die Rohrleitungsanordnung 3 über eine Halteeinrichtung 31 verfügt, die geeignet ist, die Rohrleitungseinheiten 4 der Rohrleitungsanordnung 3 im Wesentlichen in ihrer Lageposition zu halten. Vorzugsweise wird hierzu an dem Prozessgaszulaufteil 5 ein Festlager 32 angeordnet, das sich so einstellen lässt, dass die Kontaktfläche 33 horizontal ausgerichtet ist und sich das Rohrleitungssystem 1 auf dem Festlager 32 im Wesentlichen vertikal aufbaut.

Bei der vertikalen Anordnung des Rohrleitungssystems 1 muss das Festlager 32 jedoch nicht zwingend am Prozessgaszulaufteil 5 angeordnet sein. Es besteht darüber hinaus auch die Möglichkeit, das Festlager 32 am Prozessgasablaufteil 6 anzuordnen und ein Loslager 34 mit einstellbarer axialer Führung am Prozessgaszulaufteil 5 anzuordnen, wobei die Anpressung vom Prozessgaszulaufteil 5 in Richtung des Prozessgasablaufteils 6, also in vertikaler Richtung von unten nach oben, zur Dichthaltung des Rohrleitungssystems 1, z. B. durch eine Aufhängung des Prozessgaszulaufteils 5 an Umlenkrollen mit Gegengewichten realisiert werden kann.

Das Rohrleitungssystem 1 dehnt sich entsprechend der Prozessgastemperatur in der Rohranordnung 3 nach oben aus. Angeschlossene Ausrüstungen, Zwischenteile 7, Verbindungsteile 8 müssen in der Lage sein, die axialen Längenänderungen des heißgasführenden Rohrleitungssystems 1 widerstandsfrei ohne Rückstellkräfte aufzunehmen.

Die Anpresskraft zwischen zwei Rohrleitungseinheiten 4, die sich aus der Summe der Gewichtskräfte der sich jeweils darüber befindenden Rohrleitungseinheiten 4 ergibt, nimmt von vom Prozessgaszulaufteil 5 in Richtung Prozessgasablaufteil 6, also von unten nach oben ab. In Abhängigkeit des maximal auftretenden Prozessdruckes im Rohrleitungssystem 1 und der Größe der horizontalen Anschlagflächen 35 der Rohrleitungseinheiten 4 wird die Masse des metallischen Prozessgasablaufteils 6 so angepasst, dass der Prozessdruck nicht in der Lage ist, die Rohrleitungseinheiten 4 anzuheben und das Rohrleitungssystem 1 auf diese Weise zu öffnen. Die Druckfestigkeit des metallischen bzw. des keramischen Materials ist hierbei zu beachten und wird insbesondere bei der Festlegung der Wanddicken und der Größe der Anschlagflächen 35 berücksichtigt.

Im Falle einer horizontalen Anordnung oder anderen Winkeln α der Längsmittelsachse X-X werden abweichend zur abweichend zur vertikalen Anordnung des Rohrleitungssystems 1 jedoch die metallischen Rohrleitungseinheiten 4 und die nicht-metallischen Rohrleitungseinheiten 4 mit Loslagern 34 parallel zur Rohrleitungsmittelachse X-X zur Aufnahme ihrer Eigengewichte versehen, ohne dass die Wärmedehnung der Rohrleitungseinheiten 4 und/oder des Rohrleitungssystems 1 beeinträchtigt wird.

Am Prozessgaszulaufteil 5 oder am Prozessgasablaufteil 6 des Rohrleitungssystems 1 kann ein Festlager 32 angeordnet sein.

An der dem Prozessgaszulaufteil 5 oder dem Prozessgasablaufteil 6 gegenüberliegenden Seite wird dann ein Loslager 34 in der Weise angeordnet, dass alle verbundenen Rohrleitungseinheiten 4 in Abhängigkeit des maximalen Prozessdruckes mit einem konstanten Druck axial auf die Anschlagflächen 35 unabhängig von der Prozessgastemperatur z. B. über die Kraft einer Feder oder eines Gewichts, das vorzugsweise über einen Hebel wirkt, belastet werden, sofern die Eigengewichtskräfte nicht ausreichen.

Alternativ können auch Prozessgaszulaufteil 5 oder am Prozessgasablaufteil 6 mit einem Loslager 34 ausgeführt werden, wenn die Kraftwirkung zur Erzeugung der erforderlichen Anpresskraft auf die Anschlagflächen 35 von beiden Seiten auf das Rohrleitungssystem 1 aufgebracht wird.

Des Weiteren weist das Rohrleitungssystem 1 Halterungen 40 auf, die jeweils unterhalb einer Zentriervorrichtung angeordnet sind. Die Halterungen 40 stabilisieren das Rohrleitungssystem 1 in seiner Lageposition.

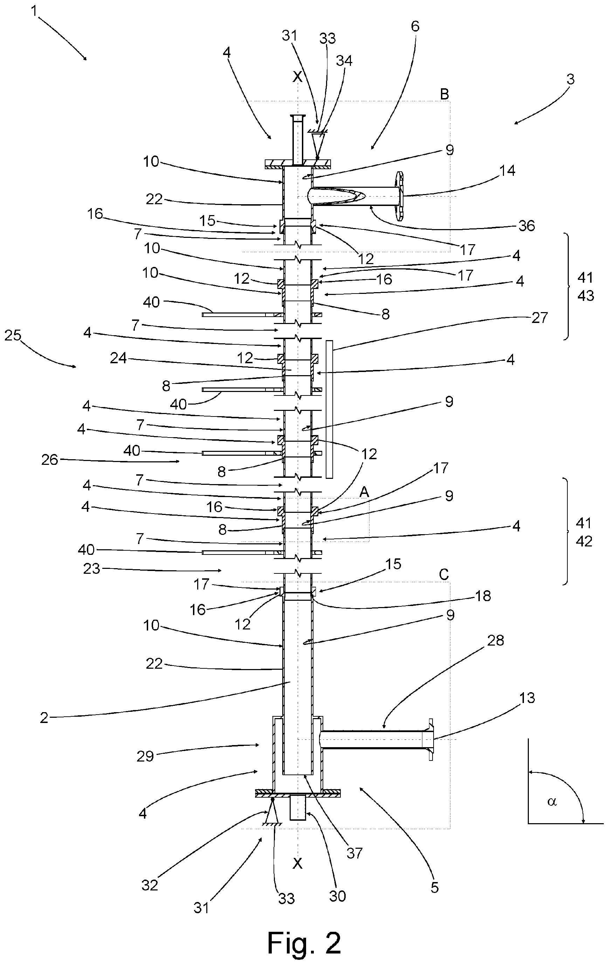

Fig. 3 zeigt eine Detailansicht des in Fig. 2 dargestellten Ausschnitts A, wobei in Ausschnitt A ein zwei Zwischenteile 7 verbindendes Verbindungsteil 8 gezeigt wird. Das nicht-metallische Verbindungsteil 8, bevorzugt als keramisches Verbindungsteil 8 ausgebildet, weist zwei Endabschnitte 11a und 11c auf, an denen jeweils eine Zentriereinrichtung 12a und 12c zur Aufnahme eines Zwischenteils 7a und 7d angeordnet ist. Die Zentriereinrichtung 12 und die Rohrleitungseinheit 4 in Form des Verbindungsteils 8 sind hierbei als bauliche Einheit 15 ausgebildet. Die Zentriereinrichtung 12 weist zur Aufnahme eines Endabschnitts 11 einer Rohrleitungseinheit 4 in Form eines Zwischenteils 7 in ihrer Innenwandfläche 9 eine Stufe 16 mit einer axial orientierten Schulter 17 aufweist, wobei die Schulter 17 als ein eine Anschlagfläche 35 umfassender Anschlag 18 für die aufzunehmende Rohrleitungseinheit 4 ausgebildet ist. In der gezeigten Ausführungsform ist die Stufe 16 als Ringstufe 19 mit einer axial orientierten Ringschulter 20 ausgebildet.

Zwischen der an einem Endabschnitt 11a des Verbindungsteils 8 angeordneten Zentriereinrichtung 12a und einem Endabschnitt 11b des Zwischenteils 7a der entsprechenden Rohrleitungseinheiten 4 ist eine Dichtungseinrichtung 21a angeordnet. Die Dichtungseinrichtung 21a ist hierbei als eine mögliche Form einer Labyrinthdichtung ausgebildet.

Zwischen der an einem Endabschnitt 11c des Verbindungsteils 8 angeordneten Zentriereinrichtung 12c und einem Endabschnitt 11d des Zwischenteils 7d der entsprechenden Rohrleitungseinheiten 4 ist eine Dichtungseinrichtung 21c angeordnet. Die Dichtungseinrichtung 21c ist hierbei als Flachdichtung ausgebildet.

Andere Dichtungseinrichtungen 21 sind in anderen nicht illustrierten Ausführungsformen realisiert.

In der Fig. 4 wird eine Detailansicht des in Fig. 2 dargestellten Ausschnitts B dargestellt, wobei in Ausschnitt B ein Prozessgasablaufteil 6 gezeigt wird. Das Prozessgasablaufteil 6 weist eine an einer Rohrleitung 22 angeordnete Zentriereinrichtung 12 zur Aufnahme eines Endabschnitts 11 des zugeordneten Zwischenteils 7 sowie einen den Prozessgasaustritt 14 umfassenden Prozessgasablauf 36 auf.

Die Zentriereinrichtung 12 weist zur Aufnahme eines Endabschnitts 11 des Zwischenteils 7 ebenso wie das Zwischenteil 7 selbst in ihrer jeweiligen Innenwandfläche 4 eine Stufe 16 mit einer axial orientierten Schulter 17 auf, wobei die Schulter 17 als ein eine Anschlagfläche 35 umfassender Anschlag 18 für die aufzunehmende Rohrleitungseinheit 4 ausgebildet ist. In der gezeigten Ausführungsform ist die Stufe 16 jeweils als Ringstufe 19 mit einer axial orientierten Ringschulter 20 ausgebildet.

Zwischen der an einem Endabschnitt 11 der Rohrleitung 22 angeordneten Zentriereinrichtung 12, die als bauliche Einheit 15 ausgebildet sind, und einem Endabschnitt 11 des Zwischenteils 7 der entsprechenden Rohrleitungseinheiten 4 ist eine Dichtungseinrichtung 21 angeordnet. Die Dichtungseinrichtung 21 ist hierbei als Flachdichtung ausgebildet.

Fig. 5 stellt eine Detailansicht des in Fig. 2 gezeigten Ausschnitts C dar, wobei in Ausschnitt C ein Prozessgaszulaufteil 5 gezeigt wird. Das Prozessgaszulaufteil 5 weist den den Prozessgaseintritt 13 umfassenden Prozessgaszulauf 28, eine Materialaufgabekammer 29, der über eine Materialaufgabeeinrichtung 30 Ausgangsstoffe zuführbar sind und im Betriebszustand zugeführt werden, und die einen Endabschnitt 11 und eine daran angeordnete Zentriereinrichtung 12 umfassende, in die Materialaufgabekammer 29 eingesteckte Rohrleitung 22 auf.

Die den Endabschnitt 11 und die daran angeordnete Zentriereinrichtung 12 umfassende Rohrleitung 22 ist in die Materialaufgabekammer 29 eingesteckt. Die Rohrleitungseintrittsfläche 37 weist einen Abstand 38 zu der Längsmittelachse Y des Prozessgaszulaufs auf, sodass das über den Prozessgaseintritt 13 des Prozessgaszulaufs 28 in das Prozessgaszulaufteil 5 einströmende, pulsierende Prozessgas vor dem Einströmen in den mit der Rohrleitung 22 beginnenden Rohrleitungsanordnungsabschnitt 23 in der Materialaufgabekammer 29 eine Umlenkung erfährt.

Die Materialaufgabeeinrichtung 30 und die Rohrleitung 22 weisen eine gemeinsame Längsmittelachse X-X auf, sodass die der Materialaufgabekammer 29 über die Materialaufgabeeinrichtung 30 im Betriebszustand zugeführten Ausgangsstoffe beim Eintritt in den als Reaktionskammer 24 des Reaktors 25 ausgebildeten Rohrleitungsanordnungsabschnitt 23 keine Umlenkung erfährt.

Darüber hinaus ist die Materialaufgabeeinrichtung 30 zweckmäßigerweise in ihrer Lageposition verstellbar in der Materialaufgabekammer 29 angeordnet. Die Verstellbarkeit der Lageposition - dargestellt durch den Doppelpfeil 39 bietet den Vorteil die Materialaufgabeeinrichtung 30 auf den jeweiligen Herstellungs- und/oder Behandlungsprozess individuell einstellen zu können. Prinzipiell wird ein Aufgabeort für die Ausgangsstoffe in der Materialaufgabekammer 29 angestrebt, der eine optimale Aufgabe mittels Materialaufgabeeinrichtung 30 ermöglicht, bspw. einer Düse, insbesondere einer Mehrstoffdüse, einem Zuführungsrohr oder einem Pulverinjektor. Durch die Materialaufgabeeinrichtung 30 besteht die Möglichkeit dem Rohrleitungssystem 1 den Ausgangsstoff stets in seiner optimal aufbereiteten Form bspw. als Lösung, Suspension, Aufschlämmung, Schmelze, Emulsion oder als Feststoff, bevorzugt unter Verwendung eines Trägergases, zuzuführen.

Der Aufgabeort wird allerdings von weiteren Parametern, wie bspw. der aufzugebenden Ausgangsstoffe, der Prozessgastemperatur, des Prozessdruckes usw. beeinflusst. Ist der optimale Aufgabeort bspw. weit in der Materialaufgabekammer 29 kann dies ggf. zu einer Überhitzung der Ausgangsstoffe bereits in der Materialaufgabeeinrichtung 30 führen, sodass die Materialaufgabeeinrichtung 30 dann etwas aus der Materialaufgabekammer 29 und somit aus dem durch die Rohrleitungsanordnung 3 strömenden, pulsierenden Prozessgasstrom herausgezogen wird.

Der optimale Aufgabeort für die Ausgangsstoffe wird daher bevorzugt als Funktion des Aufgabeortes und der Aufgabetemperatur der Ausgangsstoffe ermittelt.

Die Zentriereinrichtung 12 weist zur Aufnahme eines Endabschnitts 11 des Zwischenteils 7 ebenso wie das Zwischenteil 7 selbst in ihrer jeweiligen Innenwandfläche 4 eine Stufe 16 mit einer axial orientierten Schulter 17 auf, wobei die Schulter 17 als ein eine Anschlagfläche 35 umfassender Anschlag 18 für die aufzunehmende Rohrleitungseinheit 4 ausgebildet ist. In der gezeigten Ausführungsform ist die Stufe 16 jeweils als Ringstufe 19 mit einer axial orientierten Ringschulter 20 ausgebildet.

Zwischen der an einem Endabschnitt 11 der Rohrleitung 22 angeordneten Zentriereinrichtung 12, die als bauliche Einheit 15 ausgebildet sind, und einem Endabschnitt 11 des Zwischenteils 7 der entsprechenden Rohrleitungseinheiten 4 ist eine Dichtungseinrichtung 21 angeordnet. Die Dichtungseinrichtung 21 ist hierbei in Form einer Flachdichtung ausgebildet.

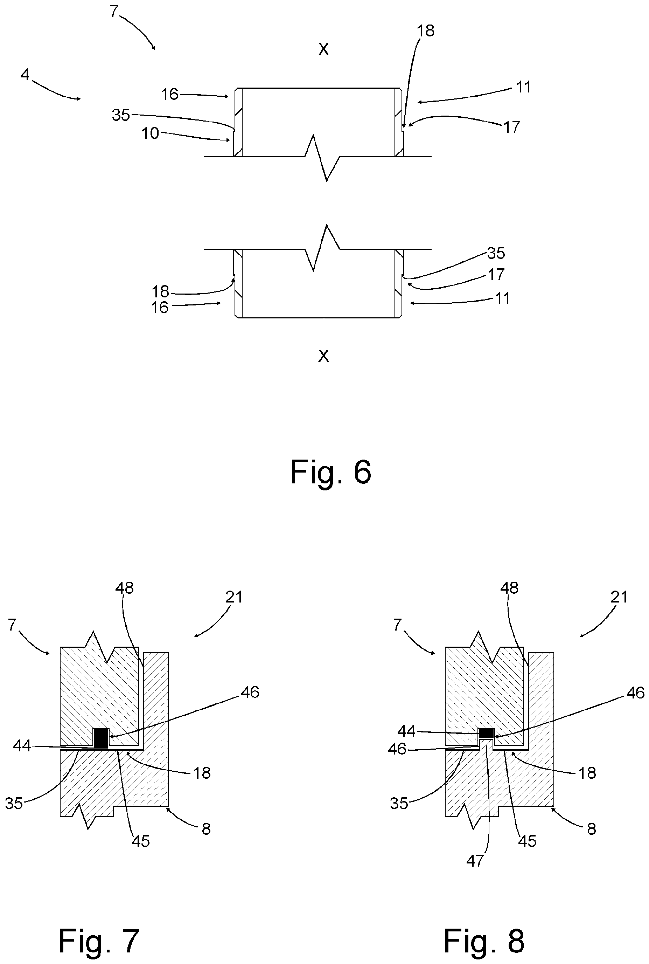

Fig. 6 zeigt eine Ausführungsform einer als Zwischenteil 7 ausgebildeten Rohrleitungseinheit 4. Die als Zwischenteil 7 ausgebildete Rohrleitungseinheit 4 weist an seinen Endabschnitten 11 jeweils in ihrer Außenwandfläche 10 eine Stufe 16 mit einer axial orientierten Schulter 17 auf, wobei die Schulter 17 als eine Anschlagfläche 35 aufweisender Anschlag 18 für die das Zwischenteil 7 aufnehmende Zentriereinrichtung 12 ausgebildet ist.

In der Fig. 7 wird eine beispielhafte erste Ausführungsform einer Dichtungseinrichtung 21 zwischen Zwischenteil 7 und Verbindungsteil 8 gezeigt. Die Dichtung 44 der Dichtungseinrichtung 21 ist in einer in der Stirnfläche 45 des Zwischenteils 7 angeordneten Nut 46 angeordnet und liegt an der Anschlagfläche 35 des Anschlags 18 der Stufe 16 des Verbindungsteils 8 an und wird zwischen Zwischenteil 7 und Verbindungsteil 8 unter Krafteinwirkung abdichtend angepresst. Die Dichtung 44 ist hierbei vorzugsweise ein Vlies, ein Gewebe oder eine metallische Dichtung.

Fig. 8 zeigt eine beispielhafte zweite Ausführungsform einer Dichtungseinrichtung 21 zwischen Zwischenteil 7 und Verbindungsteil 8. Die Dichtung 44 der Dichtungseinrichtung 21 ist in einer in der Stirnfläche 45 des Zwischenteils 7 angeordneten Nut 46 angeordnet. Eine auf der Anschlagsfläche 35 des Anschlags 18 der Stufe 16 des Verbindungsteils 8 ausgebildete Feder 47 presst die Dichtung 44 in der Nut 46 unter Krafteinwirkung abdichtend an. Die Dichtung 44 ist hierbei vorzugsweise ein Vlies, ein Gewebe oder eine metallische Dichtung. Die zweite Ausführungsform bildet zusätzliche eine Art Labyrinthdichtung für den Prozessgasstrom aus.

Die Dichtungen 44 sind in einer nicht gezeigten weiteren Ausführungsform nicht auf der Anschlagsfläche 35, sondern auf der zur Anschlagsfläche 35 senkrecht stehenden Schulterfläche 48 angeordnet.

## Patentansprüche

1. Rohrleitungssystem (1) umfassend eine einen Strömungskanal (2) aufweisende Rohrleitungsanordnung (3), die über mindestens drei eine Rohrleitungsmittelachse (X-X), eine Innenwandfläche (9) und eine Außenwandfläche (10) aufweisende Rohrleitungseinheiten (4) verfügt und die zumindest teilweise einen eine Reaktionskammer (24) umfassenden Reaktor (25) zur Herstellung und/oder Behandlung von Partikel (P) in einem Prozessgasstrom, insbesondere in einem pulsierenden Prozessgasstrom, ausbildet, wobei eine Rohrleitungseinheit (4) als Prozessgaszulaufteil (5), mindestens eine Rohrleitungseinheit (4) als Zwischenteil (7) und eine Rohrleitungseinheit (4) als Prozessgasablaufteil (6) ausgebildet ist, wobei jede Rohrleitungseinheit (4) wenigstens einen einer benachbarten Rohrleitungseinheit (4) zugeordneten Endabschnitt (11) aufweist, und wobei ferner an einem Endabschnitt (11) einer Rohrleitungseinheit (4) von einander paarweise zugeordneten Rohrleitungseinheiten (4) eine Zentriereinrichtung (12) angeordnet ist, die zur Aufnahme eines Endabschnitts (11) der anderen Rohrleitungseinheit (4) der einander paarweise zugeordneten Rohrleitungseinheiten (4) geeignet ist, sodass ein geschlossener Strömungskanal (2) von einem Prozessgaseintritt (13) des Prozessgaszulaufteils (5) bis zu einem Prozessgasaustritt (14) des Prozessgasablaufteils (6) erzeugt wird, **dadurch gekennzeichnet, dass** das Prozessgaszulaufteil (5) sowie das Prozessgasablaufteil (6) aus einem metallischen Werkstoff und mindestens ein Zwischenteil (7) aus einem nicht-metallischen Werkstoff ausgebildet ist.

2. Rohrleitungssystem (1) nach Anspruch 1, **dadurch gekennzeichnet, dass** der nicht-metallische Werkstoff ein nicht schweißbarer Werkstoff ist.

3. Rohrleitungssystem (1) nach Anspruch 1 oder 2, **dadurch gekennzeichnet, dass** der nicht-metallische Werkstoff ein keramischer Werkstoff ist.

4. Rohrleitungssystem (1) nach einem der vorhergehenden Ansprüche, **dadurch gekennzeichnet, dass** der nicht-metallische Werkstoff eine Wärmeleitfähigkeit von größer gleich 1,0 W/(mK) bei einer Herstellungs- und/oder Behandlungstemperatur aufweist, bevorzugt größer gleich 2,0 W/(mK), besonders bevorzugt größer gleich 3,0 W/(mK), ganz besonders bevorzugt größer gleich 4,0 W/(mK), am meisten bevorzugt von größer gleich 5,0 W/(mK).

5. Rohrleitungssystem (1) nach einem der vorhergehenden Ansprüche, **dadurch gekennzeichnet, dass** die Zentriereinrichtung (12) und die Rohrleitungseinheit (4) als bauliche Einheit (15) ausgebildet sind.

6. Rohrleitungssystem (1) nach einem der vorhergehenden Ansprüche, **dadurch gekennzeichnet, dass** die Zentriereinrichtung (12) zur Aufnahme eines Endabschnitts (11) einer Rohrleitungseinheit (4) in ihrer Innenwandfläche (9) eine Stufe (16) mit einer axial orientierten Schulter (17) aufweist, wobei die Schulter (17) als eine Anschlagfläche (35) aufweisender Anschlag (18) für die aufzunehmende Rohrleitungseinheit (4) ausgebildet ist, wobei zweckmäßigerweise die Stufe (16) als Ringstufe (19) mit einer axial orientierten Ringschulter (20) ausgebildet ist.

7. Rohrleitungssystem (1) nach einem der vorhergehenden Ansprüche, **dadurch gekennzeichnet, dass** zwischen einem Endabschnitt (11) einer Rohrleitungseinheit (4) und der Zentriereinrichtung (12) eine Dichtungseinrichtung (21) angeordnet ist, wobei zweckmäßigerweise die Dichtungseinrichtung (21) als Flachdichtung, Profildichtung, Pressdichtung und/oder Labyrinthdichtung ausgebildet ist.

8. Rohrleitungssystem (1) nach einem der vorhergehenden Ansprüche, **dadurch gekennzeichnet, dass** das Rohrleitungssystem (1) eine ein nicht-metallisches Zwischenteil (7) erwärmende Heizeinrichtung (27) aufweist, wobei zweckmäßigerweise die Heizeinrichtung (27) geeignet ist, das durch die Rohrleitungsanordnung (3), insbesondere den Rohrleitungsanordnungsabschnitt (23), strömende, pulsierende Prozessgas auf eine Herstellungs- und/oder Behandlungstemperatur von 1.200 °C bis 3000 °C, bevorzugt von 1.200 °C bis 2200 °C, besonders bevorzugt von 1.300 °C bis 1800 °C, am meisten bevorzugt von 1.400 °C bis 1500 °C zu erwärmen.

9. Rohrleitungssystem (1) nach einem der vorhergehenden Ansprüche, **dadurch gekennzeichnet, dass** das Prozessgaszulaufteil (5) und das Prozessgasablaufteil (6) jeweils eine einen Endabschnitt (11) aufweisende Rohrleitung (22) umfassen, wobei der jeweilige Endabschnitt (11) der Rohrleitung (22) über eine Zentriereinrichtung (12) verfügt.

10. Rohrleitungssystem (11) nach einem der vorhergehenden Ansprüche, **dadurch gekennzeichnet, dass** das Prozessgaszulaufteil (5) über eine Materialaufgabekammer (29) verfügt, der über eine Materialaufgabeeinrichtung (30) Ausgangsstoffe zuführbar sind oder zugeführt werden.

11. Rohrleitungssystem (1) nach Anspruch 9 und 10, **dadurch gekennzeichnet, dass** die Rohrleitung (22) in die Materialaufgabekammer (29) eingesteckt ist, sodass das über den Prozessgaszulauf (28) in das Prozessgaszulaufteil (5) einströmende, pulsierende Prozessgas vor dem Einströmen in die Rohrleitung (22) in der Materialaufgabekammer (29) eine Umlenkung erfährt.

12. Rohrleitungssystem (1) nach einem der Anspruch 9 und 10 oder 11, **dadurch gekennzeichnet, dass** die Materialaufgabeeinrichtung (30) und die Rohrleitung (22) eine gemeinsame Längsmittelachse (X-X) aufweisen.

13. Rohrleitungssystem (1) nach einem der Ansprüche 10 bis 12, **dadurch gekennzeichnet, dass** die Materialaufgabeeinrichtung (30) in ihrer Lageposition verstellbar in der Materialaufgabekammer (29) angeordnet ist.

14. Rohrleitungssystem (1) nach einem der vorhergehenden Ansprüche, **dadurch gekennzeichnet, dass** das Rohrleitungssystem (1) über eine als nicht metallisches Verbindungsteil (8), bevorzugt als keramisches Verbindungsteil (8), ausgebildete Rohrleitungseinheit (4) verfügt, wobei das Verbindungsteil (8) zwei Endabschnitte (11) aufweist, an denen jeweils eine Zentriereinrichtung (12) angeordnet ist.

15. Rohrleitungssystem (1) nach einem der vorhergehenden Ansprüche, **dadurch gekennzeichnet, dass** die Rohrleitungsanordnung (1) über eine Halteeinrichtung (31) verfügt, die geeignet ist, die Rohrleitungseinheiten (4) der Rohrleitungsanordnung (3) im Wesentlichen in ihrer Lageposition zu halten.

16. Rohrleitungssystem (1) nach einem der vorhergehenden Ansprüche, **dadurch gekennzeichnet, dass** die als Zwischenteil (7) ausgebildete Rohrleitungseinheit (4) an seinen Endabschnitten (11) jeweils in ihrer Außenwandfläche (10) eine Stufe (16) mit einer axial orientierten Schulter (17) aufweist, wobei die Schulter (17) als ein eine Anschlagfläche (35) aufweisender Anschlag (18) für die das Zwischenteil (7) aufnehmende Zentriereinrichtung (12) ausgebildet ist.

17. Verwendung eines Rohrleitungssystems (1) nach einem der vorhergehenden Ansprüche zur Herstellung und/oder Behandlung von Partikeln (P) in einem Prozessgasstrom, bevorzugt in einem pulsierenden Prozessgasstrom.
